# EUROPEAN PATENT APPLICATION

(11) **EP 4 745 813 A1**
(43) Date of publication of application: **20.05.2026**
(21) Application number: 25211132.3
(22) Date of filing: 24.10.2025
(51) Int. Cl.: G06F 21/57, G06F 8/65, G06F 9/4401

(54) **ATOMICITY IN OTA UPDATES FOR VEHICLE SYSTEMS**

(30) Priority: 13.11.2024 US 202418946821
(71) Applicant: TOYOTA JIDOSHA KABUSHIKI KAISHA, Toyota-shi, Aichi-ken 471-8571 (JP)
(72) Inventor: BASTIEN, Jean-François, Chuo-Ku, 103-0022 (JP); BERGER, Peter, Chuo-Ku, 103-0022 (JP)
(74) Representative: D Young & Co LLP

(57) **Abstract**

Updating a system with atomic OTA updates is performed by updating an original data structure within a first memory partition of a first controller to form an updated data structure within a second memory partition of the first controller, wherein the original data structure remains unmodified, and wherein the first memory partition is in use by an operating program of the first controller, and the second memory partition is not in use by the operating program; validating the updated data structure; transmitting, to a synchronization entity, an indication that the second memory partition is valid; receiving, from the synchronization entity, an indication that the first controller and all other controllers in a mobile computing network each has a validated memory partition compatible with the second memory partition; applying, to the second memory partition, an attribute indicating the second memory partition for use by the operating program upon restart.

## Description

### BACKGROUND

Device software updates are for maintaining and enhancing the functionality, security, and performance of electronic devices in modern society. Software updates often include patches for bugs that could affect device performance or security vulnerabilities, and manufacturers may release updates that add new functionalities or improve existing features, enhancing user experience. Regular software updates are for protecting devices against emerging security threats, helping to safeguard user data. As new technologies emerge, software updates enable devices to remain compatible with new hardware and software standards. By regularly updating software, users enable their devices to operate optimally and are protected against potential threats.

### BRIEF DESCRIPTION OF THE DRAWINGS

Aspects of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
FIG. 1 is a schematic diagram of a system for performing atomic over-the-air (OTA) updates, according to at least one embodiment of the subject disclosure.
FIG. 2 is a schematic diagram of a controller of a device for performing atomic OTA updates, according to at least one embodiment of the subject disclosure.
FIG. 3 is an operational flow for validation of updated data structure, according to at least one embodiment of the subject disclosure.
FIG. 4 is an operational flow for synchronization and restarting operating program, according to at least one embodiment of the subject disclosure.
FIG. 5 is an operational flow for synchronization and restarting operating program, according to at least one embodiment of the subject disclosure.
FIG. 6 is a block diagram of a hardware configuration for performing atomic OTA updates, according to at least some embodiments of the subject disclosure.

### DETAILED DESCRIPTION

The following disclosure provides many different embodiments, or examples, for implementing different features of the provided subject matter. Specific examples of components, values, operations, materials, arrangements, or the like, are described below to simplify the present disclosure. These are, of course, merely examples and are not intended to be limiting. Other components, values, operations, materials, arrangements, or the like, are contemplated. In addition, the present disclosure may repeat reference numerals and/or letters in the various examples. This repetition is for the purpose of simplicity and clarity and does not in itself dictate a relationship between the various embodiments and/or configurations discussed.

Atomicity updates, in the context of_over-the-air (OTA) updates, wired updates, or the like, refer to the principle that an update process should either complete fully or not at all. This all-or-nothing approach ensures that the device's software is either entirely updated to the new version or remains unchanged. An atomic transaction is an indivisible and irreducible series of operations such that either all operations occur and become observable, or some of the operations occur but do not become observable, i.e., either all or none of the sub-operations are observable. Some of the sub-operations can be atomic. For device software updates, atomicity of an update enables a device to be completely updated, such that all software components are updated, and the device is not left with a lone outdated component that is incompatible with the updated components. For example, A/B system updates, also known as seamless updates, enable a workable booting system to remain on the disk at all times during an over-the-air (OTA) update, as compared to file-patching based updates. A/B system updates use two sets of partitions referred to as slots (normally slot A and slot B). The system executes from the current slot while the partitions in the unused slot are not accessed by the running system during normal operation. The current slot is bootable when the system is running, but the other slot may have an old (still correct) version of the system, a newer version, or invalid data. Regardless of what the current slot is, there is one slot that is the active slot (the one the bootloader will boot from on the next boot) or the preferred slot. However, when OTA updates for devices are not employed with atomicity, significant problems can arise including partial updates and incompatibility, device bricking, data corruption, increased downtime, security vulnerabilities and user frustration.

This is especially true for automobile system updates, where significant problems can arise if the automobile system updates are incomplete. For example, updates that are not atomic can jeopardize the automobile systems that are critical for safety, including braking, steering, and airbag systems. A failed update could impair the functionality of safety features, increasing the risk of accidents. A failed update can defeat a safety qualification or government homologation of the system, because the qualification or homologation assumes a complete system update, not a partial update. In addition, incomplete updates may leave certain components vulnerable to exploitation, as cybersecurity threats can target outdated components, leading to potential breaches that can compromise vehicle control or user data. Updates of the system in-vehicle and the software running on the system, which span multiple electronic control units (ECUs) and micro controller units (MCUs), benefit from atomicity of updates of ECUs and MCUs, rollbacks of all ECUs/MCUs on failure, and detection of failure in updates. The problem for systems in-vehicle is that there are many ECUs and MCUs that must be updated together. Not having atomic updates creates a combinatorial problem where all potential combinations of ECU/MCU updates need to be tested and certified as safe, instead of testing and certifying "all or nothing."

In at least some embodiments described herein, the solution to the above-mentioned problem is to synchronize the ECUs and MCUs, establishing a protocol for correct updates. In at least some embodiments, only when all ECUs and MCUs have confirmed a proper update is the update "locked-in" to prevent down-grading. In at least some embodiments, manufacturers can also implement atomic updates for one ECU, but if even one of the other ECUs does not properly update, then all updates must roll back. In at least some embodiments, specific details of the protocol involve tying security properties, such as hardware enforced mechanisms like secure boot of each ECU and MCU to the update. In at least some embodiments, the solution benefits from at least some additional programming on each individual ECU and MCU, so that the ECU and MCU implements a step in between validating its own update and locking in the update. In at least some embodiments, the solution may include another ECU or MCU to confirm proper update of all ECUs and MCUs before instructing the ECUs and MCUs to lock-in the update. In at least some embodiments, the confirmation and instructing process can be performed by a server, such as an OTA server. In at least some embodiments, an existing ECU or MCU can be designated to perform the tasks of confirmation, instructing and receiving additional programming to do so. In at least some embodiments, means such as "distributed consensus protocols" can be employed, and potentially combined with checksums or hashes or cryptographic authentication methods such as public-key cryptography, to deal with problems of reliability, fault-tolerance, or trust in a decentralized system.

In at least some embodiments, by implementing atomicity in OTA updates for vehicle systems, manufacturers are able to enhance safety, security, reliability and user satisfaction of the vehicle, while being able to reduce the risks of having incomplete updates of the automobile systems.

In at least some embodiments, employing atomicity in OTA updates for device software, especially for vehicle systems, enables enhancement of safety, reliability, and user satisfaction while also promoting cost-effectiveness and security.

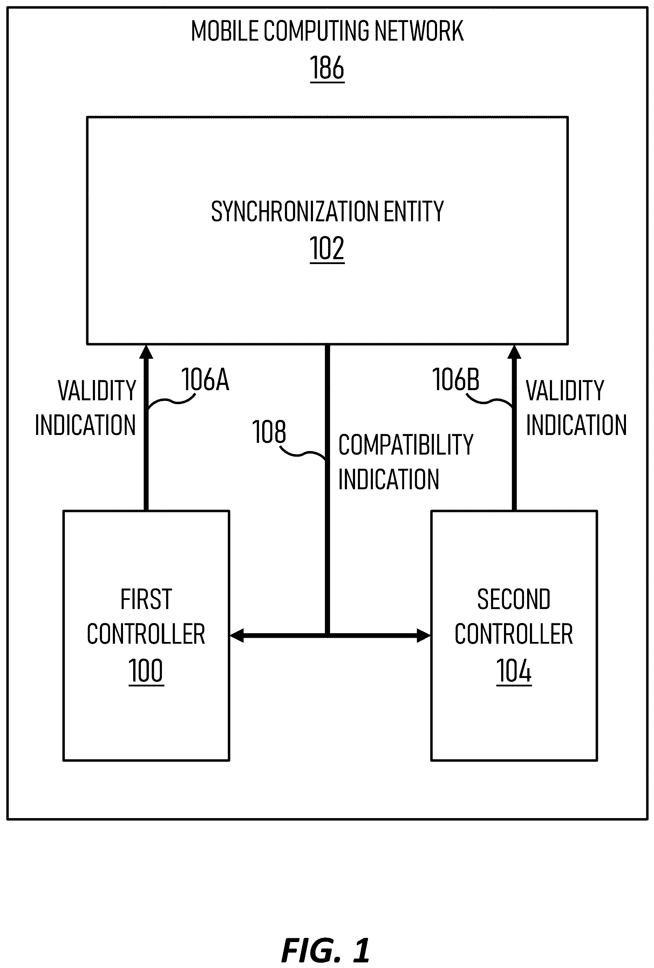

FIG. 1 is a schematic diagram of a system for performing atomic over-the-air (OTA) updates, according to at least one embodiment of the subject disclosure. The system includes a first controller 100, a synchronization entity 102 and a second controller 104 connected within a mobile computing network 186. First controller 100 is in communication with synchronization entity 102. Second controller 104 is in communication with synchronization entity 102. In at least some embodiments, first controller 100 and second controller 104 are connected to each other, for example, through wireless communication. In at least some embodiments, first controller 100, second controller 104 and synchronization entity 102 are parts of a single device, such as an automobile.

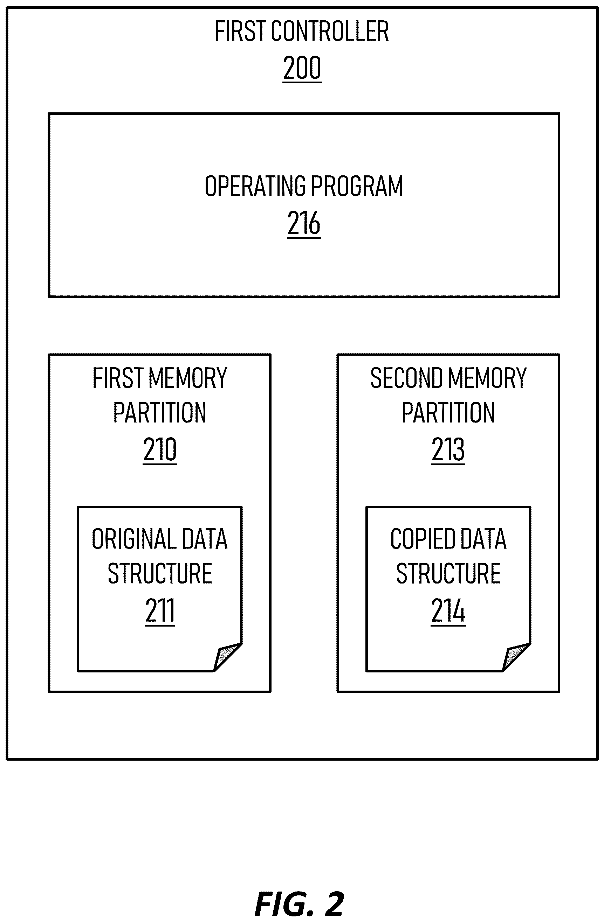

First controller 100 is configured to transmit validity indication 106A to synchronization entity 102, and to receive compatibility indication 108 from synchronization entity 102. In at least some embodiments, first controller 100 is configured to transmit an indication to synchronization entity 102 that a memory partition of first controller 100 is valid. In at least some embodiments, first controller 100 is configured to receive an indication from synchronization entity 102 that first controller 100 has a validated memory partition compatible with the memory partition. In at least some embodiments, first controller 100 is a specialized electronic device or module that manages specific functions or subsystems within the vehicle. In at least some embodiments, first controller 100 is an ECU or an MCU. In at least some embodiments, first controller 100 is configured to oversee specific vehicle functions such as engine management, transmission control, braking systems, infotainment, and more, and each subsystem may have its own dedicated controller. In at least some embodiments, first controller 100 is configured to communicate with other controllers, e.g., second controller 104, and with a central processing unit (CPU) via networks such as Controller Area Network (CAN) or Ethernet or Peripheral Component Interconnect Express (PCIe) or Universal Serial Bus (USB) or Local Internet Network (LIN). In at least some embodiments, first controller 100 is a controller of an automobile system including memory partitions having original data structures and copied data structures, such as a first controller 200 shown in FIG. 2, which will be explained hereinafter.

Second controller 104 is configured to transmit validity indication 106B to synchronization entity 102, and to receive compatibility indication 108 from synchronization entity 102. In at least some embodiments, second controller 104 is configured to transmit an indication to synchronization entity 102 that a memory partition of second controller 104 is valid. In at least some embodiments, second controller 104 is configured to receive an indication from synchronization entity 102 that second controller 104 has a validated memory partition compatible with the memory partition. In at least some embodiments, second controller 104 is a specialized electronic device or module that manages specific functions or subsystems within the vehicle. In at least some embodiments, second controller 104 is an ECU or an MCU. In at least some embodiments, second controller 104 is configured to oversee specific vehicle functions such as engine management, transmission control, braking systems, infotainment, and more, and each subsystem may have its own dedicated controller. In at least some embodiments, second controller 104 is configured to communicate with other controllers, e.g., first controller 100, and with a central processing unit (CPU) via networks such as Controller Area Network (CAN) or Ethernet or Peripheral Component Interconnect Express (PCIe) or Universal Serial Bus (USB) or Local Interconnect Network (LIN). In at least some embodiments, second controller 104 has similar structures as first controller 100, such as first controller 200 shown in FIG. 2, which will be explained hereinafter.

Synchronization entity 102 is configured to transmit compatibility indication 108 to first controller 100 and second controller 104, and to receive validity indication 106A from first controller 100, and validity indication 106B from second controller 104. In at least some embodiments, synchronization entity 102 is a component or mechanism configured to enable the consistent state and operation of various subsystems during updates or when interacting with different parts of the vehicle's software architecture. In at least some embodiments, synchronization entity 102 is configured to act as a mediator that coordinates the state of multiple subsystems within the vehicle. In at least some embodiments, synchronization entity 102 is configured to track the state of each subsystem, enabling all parts of the vehicle to be aware of changes made during an update, which includes managing versions, Application Programming Interfaces (API) lists, service lists, or capabilities and enabling all modules to be compatible with one another after the update.

Mobile computing network 186 is configured to enable communication among first controller 100, second controller 104 and synchronization entity 102. In at least some embodiments, first controller 100 and second controller 104 transmit validity indications 106A and 106B to synchronization entity 102 through mobile computing network 186. In at least some embodiments, synchronization entity 102 transmits compatibility indication 108 to first controller 100 and second controller 104 through mobile computing network 186. In at least some embodiments, mobile computing network 186 is configured to deliver software and software OTA updates to vehicles over wireless networks, which enables manufacturers to enhance vehicle functionality, fix bugs, and improve safety features. In at least some embodiments, mobile computing network 186 is a wired network, a 4G LTE network, a 5G network, or a Wi-Fi network that allows Vehicle-to-Vehicle (V2V) communication or Vehicle-to-Everything (V2X) communication.

FIG. 2 is a schematic diagram of a controller of a device for performing atomic OTA updates, according to at least one embodiment of the subject disclosure. First controller 200 includes a first memory partition 210, a second memory 213 and an operating program 216. First memory partition 210 stores an original data structure 211, and second memory partition 213 stores a copied data structure 214.

First controller 200 is configured to store original data structure 211 within first memory partition 210, and to store copied data structure 214 within second memory partition 213. The descriptions of first controller 100 and second controller 104 of FIG. 1 are applicable to first controller 200. In at least some embodiments, first controller 200 is configured to update original data structure 211 within first memory partition 210 to form an updated data structure within second memory partition 213 of first controller 200. In at least some embodiments, original data structure 211 remains unmodified. In at least some embodiments, first memory partition 210 is in use by operating program 216 of first controller 200, and second memory partition 213 is not in use by operating program 216 of first controller 200. In at least some embodiments, first controller 200 is configured to perform atomic updates with copy-on-write (COW) file systems or atomic file system updates. In at least some embodiments, atomic updates with COW are performed in systems like B-tree File Systems (Btrf) and Zettabyte File Systems (ZFS). In at least some embodiments, original data structure 211 is in the form of B-trees or Merkle trees. In at least some embodiments, first controller 200 is configured to copy original data structure 211 within first memory partition 210 of first controller 200 to form copied data structure 214 within second memory partition 213 of first controller 200. In at least some embodiments, first controller 200 is configured to replace copied data structure 213 stored within second memory partition 213 of first controller 200 with the updated data structure. In at least some embodiments, first controller 200 is configured to validate the updated data structure stored within second memory partition 213 of first controller 200. In at least some embodiments, first controller 200 is configured to transmit validity indication 106A of second memory partition 213 of first controller 213 being valid to synchronization entity 102. In at least some embodiments, first controller 200 is configured to receive compatibility indication 108 of first controller 200 having a validated memory partition compatible with second memory partition 213 of first controller 200. In at least some embodiments, first controller 200 is configured to apply an attribute to second memory partition 213 of first controller 200.

First memory partition 210 is configured to store original data structure 211. In at least some embodiments, first memory partition 210 is configured to facilitate copying of original data structure 211 within first memory partition 210 of first controller 200 to form copied data structure 214 within second memory partition 213 of first controller 200. In at least some embodiments, first memory partition 210 is configured for use by operating program 216 of first controller 200.

Second memory partition 213 is configured to store copied data structure 214. In at least some embodiments, second memory partition 213 is configured to receive original data structure 211 within first memory partition 210 of first controller 200 and form copied data structure 214 within second memory partition 213 of first controller 200. In at least some embodiments, second memory partition 213 is configured for selective use by operating program 216 of first controller 200. In at least some embodiments, copied data structure 214 is updated to form an updated data structure within second memory partition 213 of first controller 200. In at least some embodiments, second memory partition 213 is configured to facilitate validation of the updated data structure stored within second memory partition 213 of first controller 200. In at least some embodiments, second memory partition 213 is configured for application of an attribute indicating that second memory partition 213 is for use by operating program 216 upon restart. In at least some embodiments, first memory partition 210 and second memory partition 213 are separate file systems, separate memory banks, separate memory blocks, separate memory registers, or groups thereof.

Operating program 216 is configured to utilize first memory partition 210 and/or second memory partition 213. In at least some embodiments, operating program 216 is configured to selectively use either first memory partition 210 or second memory partition 213. In at least some embodiments, operating program 216 is configured to utilize an attribute indicating that second memory partition 213 is upon restart, once applied to second memory partition 213. In at least some embodiments, operating program 216 is configured to restart after the attribute is applied to second memory partition 213. In at least some embodiments, operating program 216 is configured to transmit validity indication 106A to synchronization entity 102 after restarting. In at least some embodiments, operating program 216 is firmware, a hypervisor, an operating system, a user program, or any other form of updateable program.

Original data structure 211 is stored within first memory partition 210. In at least some embodiments, original data structure 211 includes data structures and other information architectures such as data partitions, filesystems, files, metadata, and databases, etc.

Copied data structure 214 is stored within second memory partition 213. In at least some embodiments, copied data structure 214 is formed by copying original data structure 211 from first memory partition 210. In at least some embodiments, copied data structure 214 is updated to form an updated data structure within second memory partition 213. In at least some embodiments, copied data structure 214 is replaced with the updated data structure within second memory partition 213.

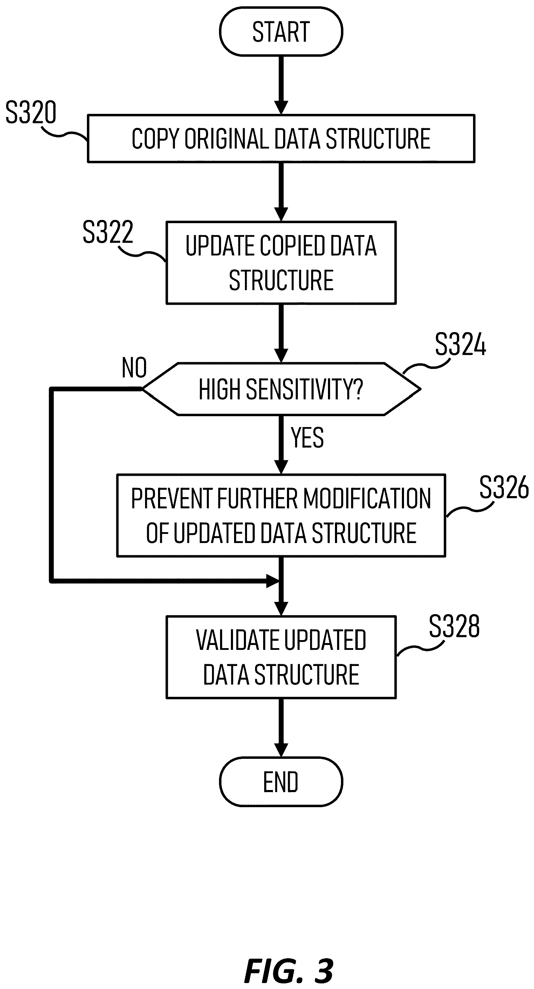

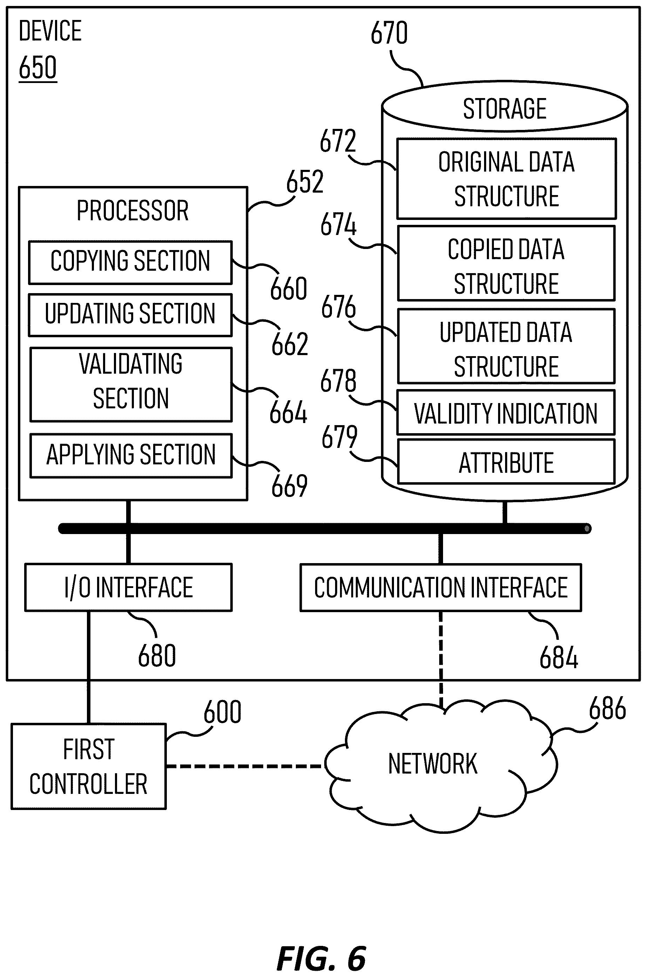

FIG. 3 is an operational flow for validation of an updated data structure, according to at least one embodiment of the subject disclosure. The operational flow provides a method of validation of updated data structure. In at least some embodiments, the method is performed by one or more controllers, such as first controller 200 shown in FIG. 2, or a processor of an integrated circuit including sections for performing certain operations, such as the processor 652 shown in FIG. 6, which will be explained hereinafter.

At S320, a copying section of the processor copies an original data structure. In at least some embodiments, the copying section copies an original data structure within a first memory partition of a first controller. In at least some embodiments, the copying section copies the original data structure within the first memory partition to form a copied data structure within a second memory partition of the first controller. In at least some embodiments, the first memory partition is in use by an operating program of the first controller, and the second memory partition is not in use by the operating program. In at least some embodiments, the copying section copies references to the original data structure instead of copying the original data structure.

At S322, an updating section of the processor updates the copied data structure. In at least some embodiments, the updating section updates the copied data structure to form an updated data structure within the second memory partition. In at least some embodiments, the updating section replaces the copied data structure with the updated data structure. In at least some embodiments, the updating section updates the copied data structure within an inactive partition, which is the second memory partition, while an active partition, i.e., the first memory partition, remains untouched and continues to run the current system.

At S324, the processor or a section thereof determines whether a level of sensitivity is high. In response to the processor determining that the level of sensitivity is high, the operational flow proceeds to further modification prevention at S326. In response to the processor determining that the level of sensitivity is low, the operational flow proceeds to updated data structure validation at S328.

At S326, the processor or a section thereof prevents further modification of the updated data structure. In at least some embodiments, the processor or a section thereof prevents further modification of the updated data structure in response to updating the original data structure. In at least some embodiments, the processor or a section thereof prevents further modification of the updated data structure in response to the level of sensibility being high. In at least some embodiments, the processor or a section thereof prevents further modification of the updated data structure by implementing a locking mechanism on the updated data structure to lock-in the update. In at least some embodiments, the lock-in for COW is the regular mode of operation, where the filesystem content is never altered, and is always copied when written. In at least some embodiments, each filesystem node has references to filesystem content, and the correctness of the update is validated by flipping the root node, i.e., from A root node to B root node. In at least some embodiments, B-tree or Merkle tree uses less space than A/B partitions. In at least some embodiments, the locking mechanism disables other processes from modifying the updated data structure while the updated data structure is being validated, and any risk of potential corruption or interference is reduced during the validation process.

At S328, a validating section of the processor validates the updated data structure. In at least some embodiments, the validating section validates the updated data structure within the second memory partition of the first controller. In at least some embodiments, the validating section validates the updated data structure by utilizing a hardware enforced mechanism, such as Secure Boot. In at least some embodiments, the updated data structure is accompanied by a cryptographic signature that verifies the integrity and authenticity of the updated data structure. In at least some embodiments, the validating section checks the cryptographic signature, and checks that the newly updated system is secure and intact. In at least some embodiments, a subset of the partition is validated, such as the file system description, and the content of the file system are validated at runtime when paged from disk to memory.

In at least some embodiments, the validation process is performed by having another ECU or MCU to confirm that the update of all ECUs and MCUs is proper before instructing the ECUs and MCUs to lock-in the update. In at least some embodiments, the confirmation and instructing process can be performed by a server, such as the OTA server. In at least some embodiments, an existing ECU or MCU can be designated to perform the tasks of confirmation and instructing, and receive additional programming to do so. In at least some embodiments, means such as "distributed consensus protocols" can be employed, and potentially combined with cryptographic signature, to deal with problems of reliability, fault-tolerance, or trust in a decentralized system.

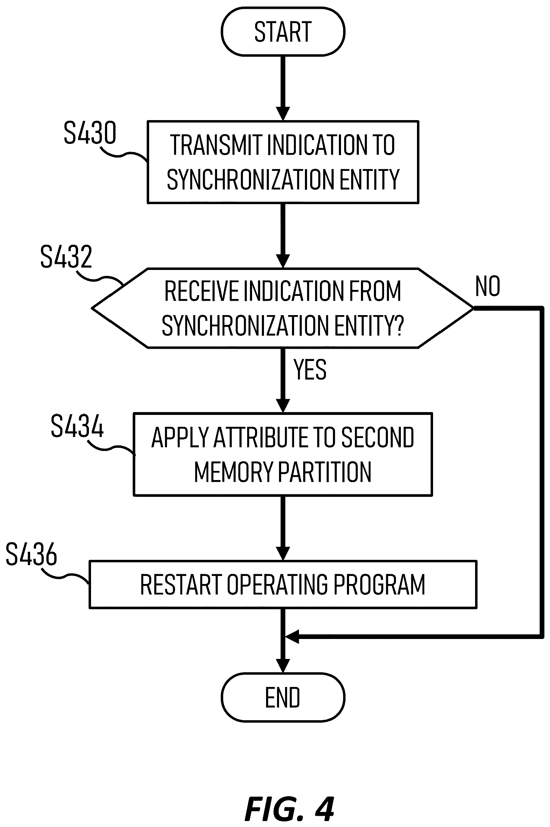

FIG. 4 is an operational flow for synchronization and restarting of an operating program, according to at least one embodiment of the subject disclosure. The operation flow provides a method of synchronizing the second memory partition and restarting the operating program. In at least some embodiments, the operating program is firmware, a hypervisor, an operating system, a user program, or any other form of updateable program. In at least some embodiments, the method is performed by one or more controllers, such as first controller 200 shown in FIG. 2, or a processor of an integrated circuit including sections for performing certain operations, such as the processor 652 shown in FIG. 6, which will be explained hereinafter.

At S430, the processor or a section thereof transmits an indication to the synchronization entity. In at least some embodiments, the processor or a section thereof transmits, to the synchronization entity, the indication that the second memory partition is valid. In at least some embodiments, the second memory partition is valid if the integrity and authenticity of the updated data structure stored in the second memory partition is ensured before the second memory partition is activated for use by the operating program.

At S432, the processor or a section thereof determines whether the compatibility indication from the synchronization entity is received. In response to the processor determining that the compatibility indication is received from the synchronization entity, the operational flow proceeds to attribution application to the second memory partition at S434. In at least some embodiments, the processor or a section thereof receives from the synchronization entity, a compatibility indication that each controller among a plurality of controllers in a mobile computing network has a validated memory partition compatible with the second memory partition, the first controller being among the plurality of controllers. In response to the processor determining that the compatibility indication is not received from the synchronization entity, the operational flow ends.

At S434, an applying section applies an attribute to the second memory partition. In at least some embodiments, the applying section applies the attribute to the second memory partition, the attribute indicating the second memory partition for use by the operating program upon restart. In at least some embodiments, the applying section applies the attribute to the second memory partition in response to receiving the compatibility indication from the synchronization entity.

At S436, the processor or a section thereof restarts the operating program. In at least some embodiments, the processor or a section thereof restarts the operating program after the attribute is applied to the second memory partition by the applying section. In at least some embodiments, the processor or a section thereof restarts the operating program to activate the second memory partition storing the updated data structure.

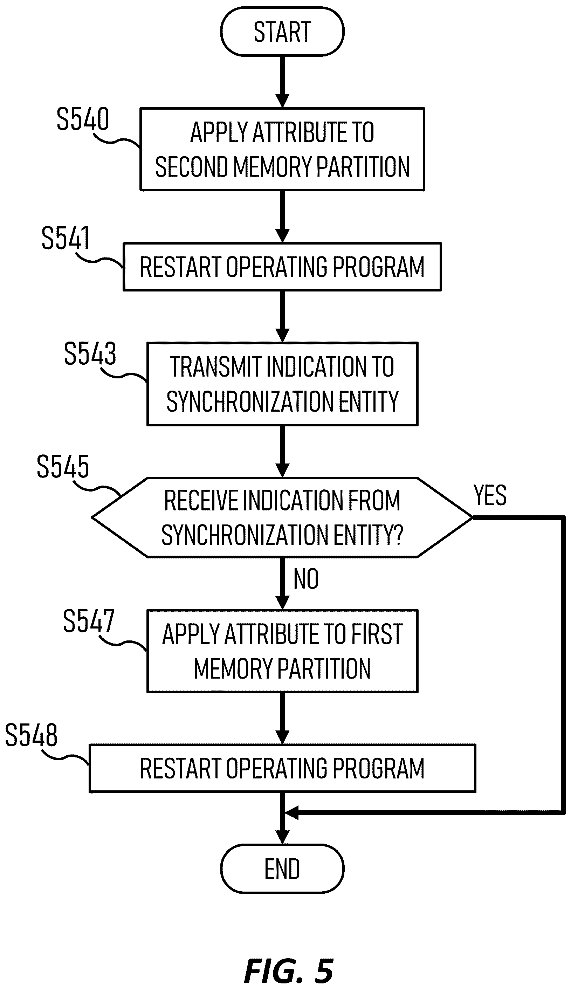

FIG. 5 is an operational flow for synchronization and restarting of an operating program, according to at least one embodiment of the subject disclosure. The operation flow provides a method of synchronizing the first memory partition and restarting the operating program. In at least some embodiments, the method is performed by one or more controllers, such as first controller 200 shown in FIG. 2, or a processor of an integrated circuit including sections for performing certain operations, such as the processor 652 shown in FIG. 6, which will be explained hereinafter.

At S540, the applying section applies an attribute to the second memory partition. In at least some embodiments, the applying section applies the attribute to the second memory partition, the attribute indicating the second memory partition for use by the operating program upon restart. In at least some embodiments, after the validating section validates the updated data structure within the second memory partition, the applying section applies the attribute to the second memory partition.

At S541, the processor or a section thereof restarts the operating program. In at least some embodiments, the processor or a section thereof restarts the operating program after the attribute is applied to the second memory partition by the applying section. In at least some embodiments, the processor or a section thereof restarts the operating program to cause the operating program to determine if there are any errors during the updates or if there are any failures of the validation process. In at least some embodiments, the processor or a section thereof restarts the operating program by performing a secure boot to check for the validity of the updated data structure stored in the second memory partition. In at least some embodiments, if the operating program successfully reboots, the processor or a section thereof determines that the updated data structure stored in the second memory partition is validated. In at least some embodiments, if the operating program fails to reboot, the processor or a section thereof performs security checks to search for security issues such as tampering. In at least some embodiments, the operating program fails to reboot due to a corrupted update or an invalid memory partition.

At S543, the processor or a section thereof transmits the indication to the synchronization entity. In at least some embodiments, the processor or a section thereof transmits, to the synchronization entity, the indication that the second memory partition is valid. In at least some embodiments, the second memory partition is valid if the integrity and authenticity of the updated data structure stored in the second memory partition is ensured before the second memory partition is activated for use by the operating program.

At S545, the processor or a section thereof determines whether the compatibility indication from the synchronization entity is received. In at least some embodiments, the processor or a section thereof receives from the synchronization entity, the compatibility indication that each controller among the plurality of controllers in the mobile computing network has the validated memory partition compatible with the second memory partition, the first controller being among the plurality of controllers. In response to the compatibility indication from the synchronization entity being not received, the processor or a section thereof determines that at least one of the controllers among the plurality of controllers in the mobile computing network does not have the validated memory partition compatible with the second memory partition, the first controller being among the plurality of controllers. In response to the processor determining that the compatibility indication is received from the synchronization entity, the operational flow ends. In response to the processor determining that the compatibility indication is not received from the synchronization entity, the operational flow proceeds to attribute application at S547.

At S547, the applying section applies an attribute to the first memory partition. In at least some embodiments, the applying section applies the attribute to the first memory partition, the attribute indicating the first memory partition for use by the operating program upon restart. In at least some embodiments, in response to the validating section failing to validate the updated data structure within the second memory partition, the applying section applies the attribute to the first memory partition. In at least some embodiments, after the processor or a section thereof fails to receive the compatibility indication from the synchronization entity, the applying section applies the attribute to the first memory partition.

At S548, the processor or a section thereof restarts the operating program. In at least some embodiments, the processor or a section thereof restarts the operating program after the attribute is applied to the first memory partition by the applying section. In at least some embodiments, in response to a previous attempt of restarting the operating program after applying attribute to the second memory partition being failed, the processor or a section thereof restarts the operating program again to revert the operating program to the previous version before the update. In at least some embodiments, the first memory partition is in use in the previous version of the operating program.

FIG. 6 is a block diagram of a hardware configuration for performing atomic OTA updates, according to at least some embodiments of the subject disclosure.

The exemplary hardware configuration includes device 650, which interacts with first controller 600 directly or through network 686. In at least some embodiments, device 650 is a computer or other computing device that receives input or commands from first controller 600. In at least some embodiments, device 650 is integrated with first controller 600. In at least some embodiments, device 650 is a computer system that executes computer-readable instructions to perform operations for atomic OTA updates.

Device 650 includes a processor 652, a storage unit 670, an input/output interface 680, and a communication interface 684. In at least some embodiments, processor 652 is a processor or programmable circuitry executing instructions to cause the processor or programmable circuitry to perform operations according to the instructions. In at least some embodiments, processor 652 includes analog or digital programmable circuitry, or any combination thereof. In at least some embodiments, processor 652 includes physically separated storage or circuitry that interacts through a protocol. In at least some embodiments, storage unit 670 includes a non-volatile computer-readable medium capable of storing executable and non-executable data for access by processor 652 during execution of the instructions. Communication interface 684 transmits and receives data from network 686. Input/output interface 680 connects to various input and output units, such as first controller 600, via a parallel port, a serial port, a keyboard port, a mouse port, a monitor port, a touch screen, a connection with a mobile device and the like to accept commands and present information. In some embodiments, storage unit 670 is external from device 650.

Processor 652 includes copying section 660, updating section 662, validating section 664, and applying section 669. Storage unit 670 includes original data structure 672, copied data structure 674, updated data structure 676, validity indication 678, and attribute 679.

Copying section 660 is the circuitry or instructions of processor configured to copy original data structures to form copied data structures. In at least some embodiments, copying section 660 is configured to copy an original data structure within a first memory partition of a first controller to form a copied data structure within a second memory partition of the first controller, wherein the first memory partition is in use by an operating program of the first controller, and the second memory partition is not in use by the operating program. In at least some embodiments, copying section 660 utilizes information in storage unit 670, such as original data structure 672 and copied data structure 674. In at least some embodiments, copying section 660 includes sub-sections for performing additional functions, as described in the foregoing flow charts. In at least some embodiments, such sub-sections are referred to by a name associated with a corresponding function.

Updating section 662 is the circuitry or instructions of processor 652 configured to update original data structures. In at least some embodiments, updating section 662 is configured to update an original data structure within a first memory partition of a first controller to form an updated data structure within a second memory partition of the first controller, wherein the original data structure remains unmodified. In at least some embodiments, updating section 882 utilizes information in storage unit 670, such as original data structure 672, copied data structure 674 and updated data structure 676. In at least some embodiments, updating section 662 includes sub-sections for performing additional functions, as described in the foregoing flow charts. In at least some embodiments, such sub-sections are referred to by a name associated with a corresponding function.

Validating section 664 is the circuitry or instructions of processor 652 configured to validate updated data structures. In at least some embodiments, validating section 664 is configured to validate the updated data structure stored within the second memory partition. In at least some embodiments, validating section 664 includes sub-sections for performing additional functions, as described in the foregoing flow charts. In at least some embodiments, such sub-sections are referred to by a name associated with a corresponding function.

Applying section 669 is the circuitry or instructions of processor 652 configured to apply attributes to memory partitions. In at least some embodiments, applying section 669 is configured to apply an attribute to the second memory partition, the attribute indicating the second memory partition for use by the operating program upon restart. In at least some embodiments, applying section 669 is configured to apply an attribute to the first memory partition, the attribute indicating the first memory partition for use by the operating program upon restart. In at least some embodiments, applying section 669 includes sub-sections for performing additional functions, as described in the foregoing flow charts. In at least some embodiments, such sub-sections are referred to by a name associated with a corresponding function.

In at least some embodiments, the apparatus is another device capable of processing logical functions in order to perform the operations herein. In at least some embodiments, the processor and the storage unit need not be entirely separate devices, but share circuitry or one or more computer-readable mediums in some embodiments. In at least some embodiments, the storage unit includes a hard drive storing both the computer-executable instructions and the data accessed by the processor, and the processor includes a combination of a central processing unit (CPU) and RAM, in which the computer-executable instructions are able to be copied in whole or in part for execution by the CPU during performance of the operations herein.

In at least some embodiments where the apparatus is a computer, a program that is installed in the computer is capable of causing the computer to function as or perform operations associated with apparatuses of the embodiments described herein. In at least some embodiments, such a program is executable by a processor to cause the computer to perform certain operations associated with some or all of the blocks of flowcharts and block diagrams described herein.

At least some embodiments are described with reference to flowcharts and block diagrams whose blocks represent (1) steps of processes in which operations are performed or (2) sections of a processor responsible for performing operations. In at least some embodiments, certain steps and sections are implemented by dedicated circuitry, programmable circuitry supplied with computer-readable instructions stored on computer-readable media, and/or processors supplied with computer-readable instructions stored on computer-readable media. In at least some embodiments, dedicated circuitry includes digital and/or analog hardware circuits and include integrated circuits (IC) and/or discrete circuits. In at least some embodiments, programmable circuitry includes reconfigurable hardware circuits comprising logical AND, OR, XOR, NAND, NOR, and other logical operations, flip-flops, registers, memory elements, etc., such as field-programmable gate arrays (FPGA), programmable logic arrays (PLA), etc.

In at least some embodiments, the computer readable storage medium includes a tangible device that is able to retain and store instructions for use by an instruction execution device. In some embodiments, the computer readable storage medium includes, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

In at least some embodiments, computer readable program instructions described herein are downloadable to respective computing/processing devices from a computer readable storage medium or to an external computer or external storage device via a network, for example, the Internet, a local area network, a wide area network and/or a wireless network. In at least some embodiments, the network includes copper transmission cables, optical transmission fibers, wireless transmission, routers, firewalls, switches, gateway computers and/or edge servers. In at least some embodiments, a network adapter card or network interface in each computing/processing device receives computer readable program instructions from the network and forwards the computer readable program instructions for storage in a computer readable storage medium within the respective computing/processing device.

In at least some embodiments, computer readable program instructions for carrying out operations described above are assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. In at least some embodiments, the computer readable program instructions are executed entirely on the user's computer, partly on the user's computer, as a stand-alone software package, partly on the user's computer and partly on a remote computer or entirely on the remote computer or server. In at least some embodiments, in the latter scenario, the remote computer is connected to the user's computer through any type of network, including a local area network (LAN) or a wide area network (WAN), or the connection is made to an external computer (for example, through the Internet using an Internet Service Provider). In at least some embodiments, electronic circuitry including, for example, programmable logic circuitry, field-programmable gate arrays (FPGA), or programmable logic arrays (PLA) execute the computer readable program instructions by utilizing state information of the computer readable program instructions to individualize the electronic circuitry, in order to perform aspects of the subject disclosure.

While embodiments of the subject disclosure have been described, the technical scope of any subject matter claimed is not limited to the above described embodiments. Persons skilled in the art would understand that various alterations and improvements to the above-described embodiments are possible. Persons skilled in the art would also understand from the scope of the claims that the embodiments added with such alterations or improvements are included in the technical scope of the invention.

The operations, procedures, steps, and stages of each process performed by an apparatus, system, program, and method shown in the claims, embodiments, or diagrams are able to be performed in any order as long as the order is not indicated by "prior to," "before," or the like and as long as the output from a previous process is not used in a later process. Even if the process flow is described using phrases such as "first" or "next" in the claims, embodiments, or diagrams, such a description does not necessarily mean that the processes must be performed in the described order.

In at least some embodiments, updating an operating system using atomic OTA updates is performed by updating an original data structure within a first memory partition of a first controller to form an updated data structure within a second memory partition of the first controller, wherein the original data structure remains unmodified, wherein the first memory partition is in use by an operating program of the first controller, and the second memory partition is not in use by the operating program ; validating the updated data structure; transmitting, to a synchronization entity, an indication that the second memory partition is valid; receiving, from the synchronization entity, an indication that each controller among a plurality of controllers in a mobile computing network has a validated memory partition compatible with the second memory partition, the first controller being among the plurality of controllers; applying an attribute to the second memory partition, the attribute indicating the second memory partition for use by the operating program upon restart.

The foregoing outlines features of several embodiments so that those skilled in the art would better understand the aspects of the present disclosure. Those skilled in the art should appreciate that this disclosure is readily usable as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that various changes, substitutions, and alterations herein are possible without departing from the spirit and scope of the present disclosure.

## Claims

1. A method comprising:
updating an original data structure within a first memory partition of a first controller to form an updated data structure within a second memory partition of the first controller, wherein the original data structure remains unmodified, and wherein the first memory partition is in use by an operating program of the first controller, and the second memory partition is not in use by the operating program;
validating the updated data structure;
transmitting, to a synchronization entity, an indication that the second memory partition is valid;
receiving, from the synchronization entity, an indication that each controller among a plurality of controllers in a mobile computing network has a validated memory partition compatible with the second memory partition, the first controller being among the plurality of controllers; and
applying an attribute to the second memory partition, the attribute indicating the second memory partition for use by the operating program upon restart.

2. The method of claim 1, further comprising preventing further modification of the updated data structure in response to updating the original data structure.

3. The method of claim 1 or 2, wherein the original data structure is at least one of a data partition, file system, file, metadata, or database.

4. The method of any one of claims 1 to 3, wherein the applying the attribute to the second memory partition is performed in response to receiving the indication from the synchronization entity.

5. The method of any one of claims 1 to 4, further comprising restarting the operating program after the applying the attribute to the second memory partition.

6. The method of claim 5, wherein the transmitting the indication is performed after the restarting the operating program.

7. The method of any one of claims 1 to 6, wherein validating the updated data structure utilizes a hardware enforced mechanism.

8. The method of any one of claims 1 to 7, further comprising
copying the original data structure within the first memory partition to form a copied data structure within the second memory partition of the first controller,
wherein the updating includes replacing the copied data structure with the updated data structure.

9. A device comprising:
a processor configured to
update an original data structure within a first memory partition of a first controller to form an updated data structure within a second memory partition of the first controller, wherein the original data structure remains unmodified, and wherein the first memory partition is in use by an operating program of the first controller, and the second memory partition is not in use by the operating program;
validate the updated data structure;
transmit, to a synchronization entity, an indication that the second memory partition is valid;
receive, from the synchronization entity, an indication that each controller among a plurality of controllers in a mobile computing network has a validated memory partition compatible with the second memory partition, the first controller being among the plurality of controllers; and
apply an attribute to the second memory partition, the attribute indicating the second memory partition for use by the operating program upon restart.

10. The device of claim 9, wherein the processor is further configured to prevent further modification of the updated data structure in response to updating the original data structure.

11. The device of claim 9 or 10, wherein the processor applies the attribute to the second memory partition in response to receiving the indication from the synchronization entity.

12. The device of any one of claims 9 to 11, wherein the processor is further configured to restart the operating program after the applying the attribute to the second memory partition.

13. The device of claim 12, wherein the processor transmits the indication after the restarting the operating program.

14. The device of any one of claims 9 to 13, wherein the processor validates the updated data structure by utilizing a hardware enforced mechanism.

15. A computer program to cause one or more processors to perform operations comprising:
updating an original data structure within a first memory partition of a first controller to form an updated data structure within a second memory partition of the first controller, wherein the original data structure remains unmodified, and wherein the first memory partition is in use by an operating program of the first controller, and the second memory partition is not in use by the operating program;
validating the updated data structure;
transmitting, to a synchronization entity, an indication that the second memory partition is valid;
receiving, from the synchronization entity, an indication that each controller among a plurality of controllers in a mobile computing network has a validated memory partition compatible with the second memory partition, the first controller being among the plurality of controllers; and
applying an attribute to the second memory partition, the attribute indicating the second memory partition for use by the operating program upon restart.
